# EUROPEAN PATENT APPLICATION

(11) **EP 4 366 223 A2**
(43) Date of publication of application: **08.05.2024**
(21) Application number: 23208021.8
(22) Date of filing: 06.11.2023
(51) Int. Cl.: H04L 5/00

(54) **METHOD AND APPARATUS FOR SUPPORTING AN ADVANCED MOBILE COMMUNICATION SYSTEM WITH ENHANCED CHANNEL DESIGNS**

(30) Priority: 07.11.2022 US 202263382548 P; 12.10.2023 US 202318379637
(71) Applicant: MediaTek Inc., 30078 Hsinchu City (TW)
(72) Inventor: TSAI, Chiou-Wei, Hsinchu City (TW); WU, Wei-De, Hsinchu City (TW)
(74) Representative: Patentship Patentanwaltsgesellschaft mbH

(57) **Abstract**

Various solutions for supporting an advanced mobile communication system with enhanced channel designs are described. An apparatus (420) may select a first number of resource blocks (RBs) from a second number of RBs on a physical broadcast channel (PBCH) in an event that the apparatus (420) is operating in a frequency band with a transmission bandwidth less than a threshold. Then, the apparatus (420) may perform a PBCH transmission to a user equipment (410), UE, based on the first number of RBs.

## Description

### TECHNICAL FIELD

The present disclosure is generally related to mobile communications and, more particularly, to supporting an advanced mobile communication system with enhanced channel designs.

### BACKGROUND

Unless otherwise indicated herein, approaches described in this section are not prior art to the claims listed below and are not admitted as prior art by inclusion in this section.

In mobile communications, such as 5^{th} generation (5G) new radio (NR), the speed and capacity of services are expected to achieve superior performance, and the spectrum plays a critical role in this matter. There is consensus among 3^{rd} generation partnership project (3GPP) members that 5G NR needs an extensive spectrum to support various service types. For instance, high-frequency bands (e.g., 26/28 giga-hertz (GHz) and above) can be utilized to provide very large bandwidths, ultra-high capability, and very low latency. Mid-frequency bands (e.g., 3.3 Ghz to 4.2 Ghz) can be utilized to provide larger bandwidths for capacity with higher speeds and more devices. Low-frequency bands (e.g., 600/700 mega-hertz (MHz) and below) can be utilized to provide low bandwidth for wide-area coverage. Unfortunately, in most countries, the availability of new frequencies for 5G NR may be limited to very few bands, not to mention the staggering auction price and complicated regulations thereof. To cope with this issue, legacy spectrum, such as 2^{nd} generation (2G) global system for mobile communications (GSM) bands, 3^{rd} generation (3G) wideband code division multiple access (WCDMA) bands, or 4th generation (4G) long-term evolution (LTE) bands, may be reused for 5G NR. However, due to system framework differences, reusing legacy spectrum for 5G NR will inevitably cause impact on channel requirements.

Therefore, there is a need for a solution to enhance channel designs for 5G NR to support operation in dedicated spectrum allocations from legacy spectrum.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues pertaining to supporting an advanced mobile communication system with enhanced channel designs (e.g., to operate in legacy spectrum).

In a first aspect, a method may involve an apparatus selecting a first number of resource blocks (RBs) from a second number of RBs on a physical broadcast channel (PBCH) in an event that the apparatus is operating in a frequency band with a transmission bandwidth less than a threshold. The method may also involve the apparatus performing a PBCH transmission to a user equipment (UE) based on the first number of RBs. In a first embodiment of the first aspect, the method further comprises: puncturing, by the processor, a third number (Y) of RBs for the PBCH transmission, wherein Y = X - N. In a second embodiment of the first aspect in combination with the first embodiment of the first aspect, the third number of RBs comprise first Y/2 RBs and last Y/2 RBs in the second number of RBs. In a third embodiment of the first aspect in combination with the first embodiment of the first aspect, the PBCH transmission comprises a primary synchronization signal (PSS) and a secondary synchronization signal (SSS), and the PSS and the SSS are not punctured. In a fourth embodiment of the first aspect, the second number of RBs comprise 20 RBs and the threshold is 5 mega-hertz (MHz). In a fifth embodiment of the first aspect, the first number of RBs comprise 12 RBs and the transmission bandwidth is 3 MHz.

In a second aspect, a method may involve an apparatus configuring a first number of RBs for a control resource set (CORESET) of a physical downlink control channel (PDCCH) in an event that the apparatus is operating in a frequency band with a transmission bandwidth less than a threshold, wherein the first number of RBs comprise 12 RBs. The method may also involve the apparatus performing a PDCCH transmission to a UE based on the first number of RBs. In a first embodiment of the second aspect, the CORESET is associated with a CORESET index 0. In a second embodiment of the second aspect, the threshold is 5 mega-hertz (MHz), and the transmission bandwidth is 3 MHz. In a third embodiment of the second aspect, the configuring of the first number of RBs is performed based on a pre-defined table specifying a set of resource blocks and slot symbols of the CORESET for TypeO-PDCCH search space set when a subcarrier spacing (SCS) of the PDCCH is 15 kilo-herz (KHz) for frequency bands with minimum transmission bandwidth of 3 MHz. In a fourth embodiment of the second aspect, the method further comprises: configuring, by the processor, a second number of RBs for the CORESET of the PDCCH in an event that the apparatus is operating in a frequency band with a transmission bandwidth of 5 MHz, wherein the second number of RBs comprise 24 RBs. In a fifth embodiment of the second aspect in combination with the fourth embodiment of the second aspect, the configuring of the second number of RBs is performed based on a pre-defined table specifying a set of resource blocks and slot symbols of the CORESET for TypeO-PDCCH search space set when a subcarrier spacing (SCS) of the PDCCH is 15 kilo-herz (KHz) for frequency bands with minimum transmission bandwidth of 3 MHz.

In a third aspect, a method may involve an apparatus detecting a synchronization raster point associated with a cell of a transmission bandwidth on a frequency band. The method may also involve the apparatus determining a first number of RBs for a PBCH in an event that the transmission bandwidth of the frequency band is less than a threshold. The method may further involve the apparatus performing a PBCH reception from a base station (BS) based on the first number of RBs. In a first embodiment of the third aspect, the first number of RBs comprise 12 RBs and the transmission bandwidth is 3 mega-hertz (MHz). In a second embodiment of the third aspect, the method further comprises: determining, by the processor, a second number of RBs for the PBCH in an event that the transmission bandwidth of the frequency band is greater than or equal to the threshold; and performing, by the processor, the PBCH reception from the BS based on the second number of RBs. In a third embodiment of the third aspect in combination with the second embodiment of the third aspect, the second number of RBs comprise 20 RBs and the threshold is 5 mega-hertz (MHz).

In a fourth aspect, a method may involve an apparatus detecting a synchronization raster point associated with a cell of a transmission bandwidth on a frequency band. The method may also involve the apparatus configuring a first number of RBs for a CORESET of a PDCCH in an event that the transmission bandwidth of the frequency band is less than a threshold, wherein the first number of RBs comprise 12 RBs. The method may further involve the apparatus performing a PDCCH reception from a BS based on the first number of RBs. In a first embodiment of the fourth aspect, the CORESET is associated with a CORESET index 0. In a second embodiment of the fourth aspect, the threshold is 5 mega-hertz (MHz), and the transmission bandwidth is 3 MHz. In a third embodiment of the fourth aspect, the configuring of the first number of RBs is performed based on a pre-defined table specifying a set of resource blocks and slot symbols of the CORESET for Type0-PDCCH search space set when a subcarrier spacing (SCS) of the PDCCH is 15 kilo-herz (KHz) for frequency bands with minimum transmission bandwidth of 3 MHz.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-IoT), Industrial Internet of Things (IIoT), beyond 5G (B5G), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario of the time-frequency structure of a synchronization signal and physical broadcast channel (PBCH) block (SSB) in accordance with an implementation of the present disclosure.
FIG. 2 is a diagram depicting an example table for configuring the number of RBs for control resource set (CORESET) #0 in legacy spectrum in accordance with an implementation of the present disclosure.
FIG. 3 is a diagram depicting an example format of tracking reference signal (TRS) configuration in accordance with an implementation of the present disclosure.
FIG. 4 is a block diagram of an example communication system in accordance with an implementation of the present disclosure.
FIG. 5 is a flowchart of an example process in accordance with an implementation of the present disclosure.
FIG. 6 is a flowchart of another example process in accordance with an implementation of the present disclosure.
FIG. 7 is a flowchart of another example process in accordance with an implementation of the present disclosure.
FIG. 8 is a flowchart of another example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to supporting an advanced mobile communication system (e.g., 5G NR) with enhanced channel designs (e.g., to operate in legacy spectrum). According to the present disclosure, a number of possible solutions may be implemented separately or jointly. That is, although these possible solutions may be described below separately, two or more of these possible solutions may be implemented in one combination or another.

In current 5G NR (e.g., compliant with 3GPP Release 15 to Release 17), the supported minimum transmission bandwidth (TBW) has been 5 MHz. To support operation in dedicated spectrum allocations from legacy spectrum (e.g., the dedicated spectrum less than 5MHz), modification to the channel designs will be necessary. In 4G LTE, the number of RBs for TBW=3 MHz is 15, while in 5G NR, the number of RBs for resource allocation is often an even integer. For instance, the nominal resource block group (RBG) size for physical downlink shared channel (PDSCH) resource allocation Type0 is 2 or 4 for bandwidth part (BWP) with RB number not larger than 36. Moreover, according to 3GPP standard (e.g., technical specification (TS) 38.213), the number of RBs for CORESET#0 configurations as specified in Tables 13-1 to 13-10A is 24, 48, or 96. The minimum number of RB-symbol for current CORESET#0 configurations is 48. That is, the minimum number of RBs in current 5G NR channel designs cannot be confined within the number of RBs supported in the dedicated spectrum less than 5MHz (e.g., 16 RBs when TBW=3 MHz).

In view of the above, the present disclosure proposes a number of schemes pertaining to supporting an advanced mobile communication system (e.g., 5G NR) with enhanced channel designs to operate in legacy spectrum (e.g., TBW= 3-5 MHz). According to some schemes of the present disclosure, RB-level puncturing (e.g., puncturing 8 RBs out of 20 RBs) may be applied for PBCH, such that PBCH transmission bandwidth can be reduced (e.g., to 12 RBs) to support operation in legacy spectrum (e.g., TBW=3 MHz). According to some schemes of the present disclosure, a new table may be provided (e.g., defined in 3GPP standard) for configuring a reduced number (e.g., 12) of RBs for CORESET#0 of PDCCH in legacy spectrum. According to some schemes of the present disclosure, the minimum number of RBs for TRS may be reduced (e.g., from 24 to 16) to support operation in legacy spectrum. Accordingly, by applying the schemes of the present disclosure, current channel designs for 5G NR may be adapted/enhanced to support operation in legacy spectrum with minimum impact to 3GPP standard.

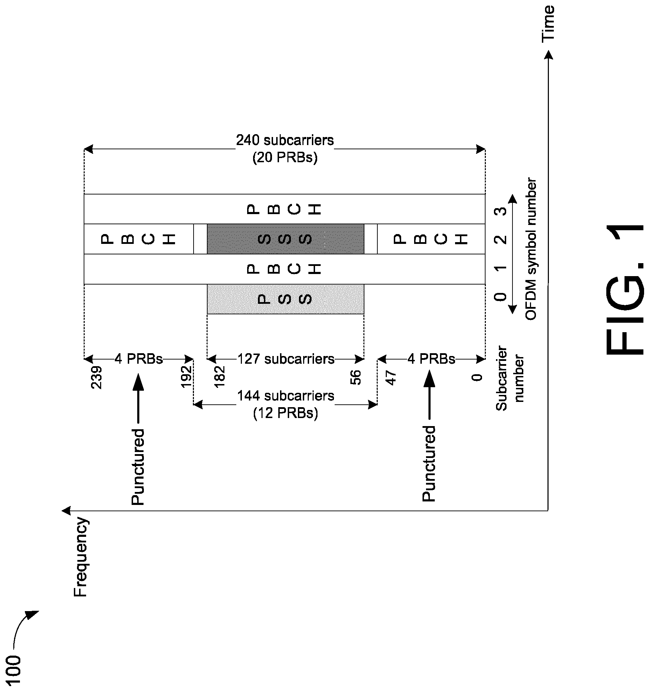

FIG. 1 illustrates an example scenario 100 of the time-frequency structure of an SSB in accordance with an implementation of the present disclosure. As shown in FIG. 1, an SSB may consist of a primary synchronization signal (PSS) and a secondary synchronization signal (SSS), each occupying 1 symbol and 127 subcarriers, and PBCH spanning across 3 OFDM symbols and 240 subcarriers, but on one symbol leaving an unused part in the middle for SSS. In particular, only N (e.g., 12) RBs are selected from the total 20 RBs of the SSB for PBCH transmission, i.e., (20-N) RBs are truncated. That is, the truncation (or called puncturing) is applied with an RB granularity. More specifically, there may be some rules with respect to determining which (20-N) RBs to be punctured out of the 20RBs for PBCH transmission. For instance, the punctured (20-N) RBs may consist of the upper/first (20-N)/2 RBs and the lower/last (20-N)/2 RBs. Alternatively, the punctured (20-N) RBs may consist of the upper/first (20-N) RBs, or the lower/last (20-N) RBs. As such, the PBCH transmission bandwidth may be reduced to (20-N) RBs (e.g., 12 RBs) to operate in the dedicated spectrum less than 5 MHz (e.g., TBW=3 MHz).

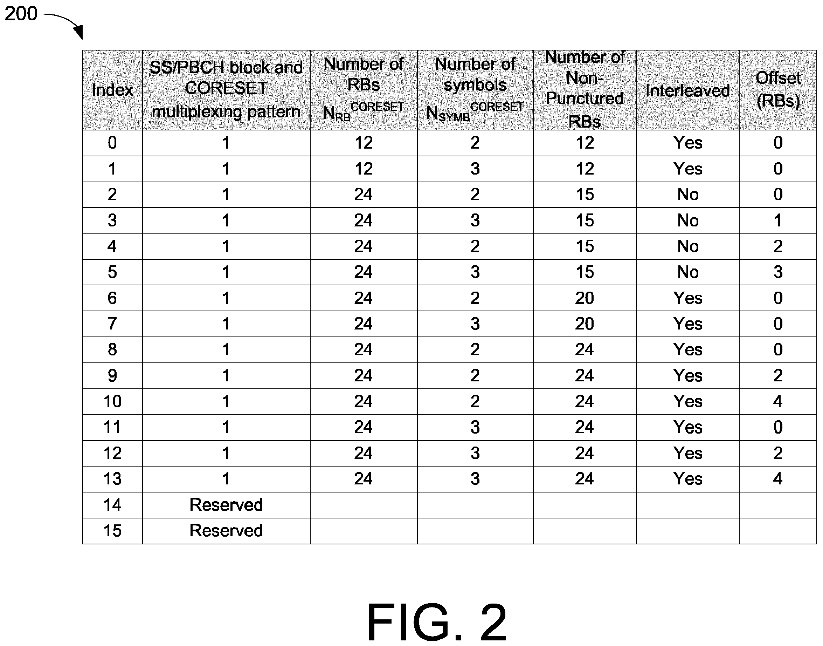

In current 5G NR, the minimum number of RBs for CORESET#0 is 24 which cannot be confined within 16 RBs when TBW is 3MHz. Instead of puncturing RBs from current PDCCH design for CORESET#0, the present disclosure proposes a new CORESET#0 configuration table to support frequency bands with minimum TBW=3 MHz. FIG. 2 illustrates an example table 200 for configuring the number of RBs for CORESET#0 in legacy spectrum in accordance with an implementation of the present disclosure. Specifically, table 200 is a pre-defined table for specifying the set of RBs and slot symbols of CORESET for TypeO-PDCCH search space set when {SS/PBCH block, PDCCH} subcarrier spacing (SCS) is {15, 15} kilo-herz (KHz) for frequency bands with minimum TBW of 3 or 5 MHz with the new sync raster points defined in TS 38.101-1. As shown in FIG. 2, the minimum number of RBs for CORESET#0 is 12 and the number of slot symbols for CORESET#0 is 2 or 3 when TBW=3 MHz, and the minimum number of RBs for CORESET#0 is 24 and the number of slot symbols for CORESET#0 is 2 or 3 when TBW=5 MHz. As such, the minimum number of RBs for CORESET#0 can be confined within the number RBs supported in TBW=3-5 MHz.

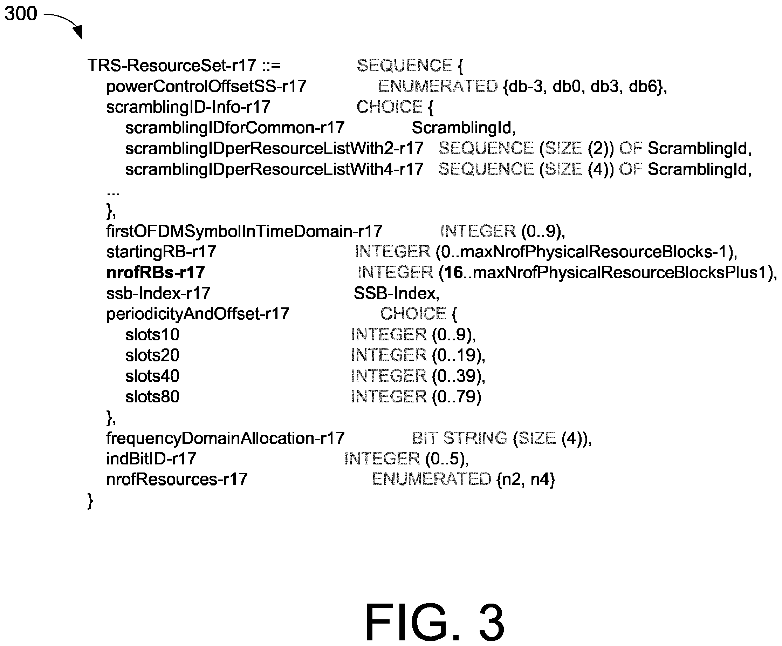

Furthermore, in current 5G NR, the minimum number of RBs supported for TRS configuration is 24 which cannot be confined within 16 RBs when TBW is 3MHz. FIG. 3 illustrates an example format 300 of TRS configuration in accordance with an implementation of the present disclosure. As shown in FIG. 3, the minimum number of RBs for TRS has been reduced from 24 to 16 to support operation in frequency bands with minimum TBW=3 MHz.

### Illustrative Implementations

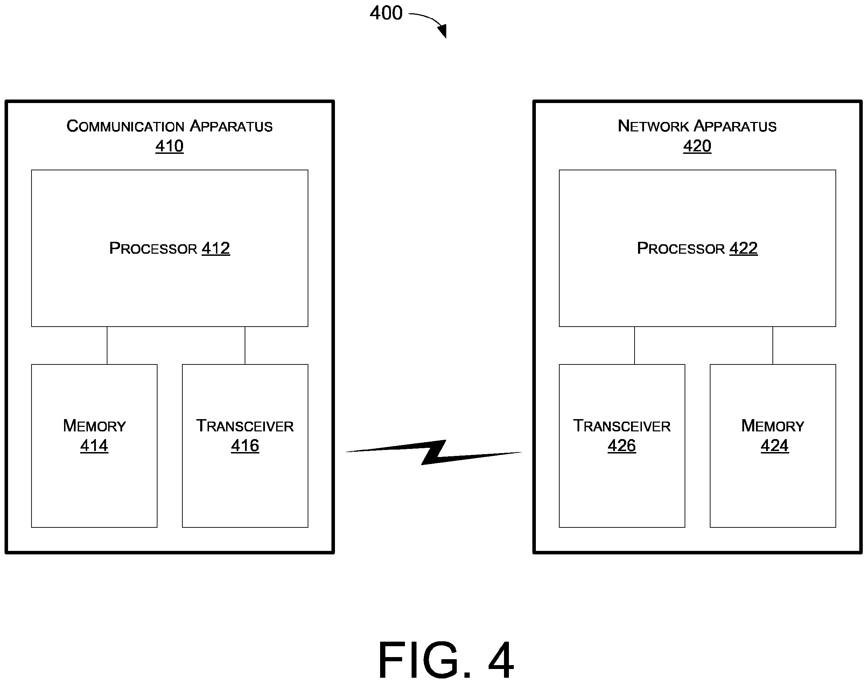

FIG. 4 illustrates an example communication system 400 having an example communication apparatus 410 and an example network apparatus 420 in accordance with an implementation of the present disclosure. Each of communication apparatus 410 and network apparatus 420 may perform various functions to implement schemes, techniques, processes and methods described herein pertaining to supporting an advanced mobile communication system with enhanced channel designs (e.g., to operate in legacy spectrum), including scenarios/schemes described above as well as processes 500, 600, and 700 described below.

Communication apparatus 410 may be a part of an electronic apparatus, which may be a UE such as a portable or mobile apparatus, a wearable apparatus, a wireless communication apparatus or a computing apparatus. For instance, communication apparatus 410 may be implemented in a smartphone, a smartwatch, a personal digital assistant, a digital camera, or a computing equipment such as a tablet computer, a laptop computer or a notebook computer. Communication apparatus 410 may also be a part of a machine type apparatus, which may be an IoT, NB-loT, or IIoT apparatus such as an immobile or a stationary apparatus, a home apparatus, a wire communication apparatus or a computing apparatus. For instance, communication apparatus 410 may be implemented in a smart thermostat, a smart fridge, a smart door lock, a wireless speaker or a home control center. Alternatively, communication apparatus 410 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 410 may include at least some of those components shown in FIG. 4 such as a processor 412, for example. Communication apparatus 410 may further include one or more other components not pertinent to the proposed scheme of the present disclosure (e.g., internal power supply, display device and/or user interface device), and, thus, such component(s) of communication apparatus 410 are neither shown in FIG. 4 nor described below in the interest of simplicity and brevity.

Network apparatus 420 may be a part of an electronic apparatus, which may be a network node such as a BS, a small cell, a router or a gateway. For instance, network apparatus 420 may be implemented in a gNB/TRP in a 5G, NR, IoT, NB-loT or IIoT network. Alternatively, network apparatus 420 may be implemented in the form of one or more IC chips such as, for example and without limitation, one or more single-core processors, one or more multi-core processors, or one or more RISC or CISC processors. Network apparatus 420 may include at least some of those components shown in FIG. 4 such as a processor 422, for example. Network apparatus 420 may further include one or more other components not pertinent to the proposed scheme of the present disclosure (e.g., internal power supply, display device and/or user interface device), and, thus, such component(s) of network apparatus 420 are neither shown in FIG. 4 nor described below in the interest of simplicity and brevity.

In one aspect, each of processor 412 and processor 422 may be implemented in the form of one or more single-core processors, one or more multi-core processors, or one or more CISC processors. That is, even though a singular term "a processor" is used herein to refer to processor 412 and processor 422, each of processor 412 and processor 422 may include multiple processors in some implementations and a single processor in other implementations in accordance with the present disclosure. In another aspect, each of processor 412 and processor 422 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 412 and processor 422 is a special-purpose machine specifically designed, arranged and configured to perform specific tasks, including supporting an advanced mobile communication system with enhanced channel designs (e.g., to operate in legacy spectrum), in a device (e.g., as represented by communication apparatus 410) and a network node (e.g., as represented by network apparatus 420) in accordance with various implementations of the present disclosure.

In some implementations, communication apparatus 410 may also include a transceiver 416 coupled to processor 412 and capable of wirelessly transmitting and receiving data. In some implementations, transceiver 416 may be capable of wirelessly communicating with different types of UEs and/or wireless networks of different radio access technologies (RATs). In some implementations, transceiver 416 may be equipped with a plurality of antenna ports (not shown) such as, for example, four antenna ports. That is, transceiver 416 may be equipped with multiple transmit antennas and multiple receive antennas for multiple-input multiple-output (MIMO) wireless communications. In some implementations, network apparatus 420 may also include a transceiver 426 coupled to processor 422. Transceiver 426 may include a transceiver capable of wirelessly transmitting and receiving data. In some implementations, transceiver 426 may be capable of wirelessly communicating with different types of UEs of different RATs. In some implementations, transceiver 426 may be equipped with a plurality of antenna ports (not shown) such as, for example, four antenna ports. That is, transceiver 426 may be equipped with multiple transmit antennas and multiple receive antennas for MIMO wireless communications.

In some implementations, communication apparatus 410 may further include a memory 414 coupled to processor 412 and capable of being accessed by processor 412 and storing data therein. In some implementations, network apparatus 420 may further include a memory 424 coupled to processor 422 and capable of being accessed by processor 422 and storing data therein. Each of memory 414 and memory 424 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 414 and memory 424 may include a type of read-only memory (ROM) such as mask ROM, programmable ROM (PROM), erasable programmable ROM (EPROM) and/or electrically erasable programmable ROM (EEPROM). Alternatively, or additionally, each of memory 414 and memory 424 may include a type of non-volatile random-access memory (NVRAM) such as flash memory, solid-state memory, ferroelectric RAM (FeRAM), magnetoresistive RAM (MRAM) and/or phase-change memory.

Each of communication apparatus 410 and network apparatus 420 may be a communication entity capable of communicating with each other using various proposed schemes in accordance with the present disclosure. For illustrative purposes and without limitation, a description of capabilities of communication apparatus 410, as a UE, and network apparatus 420, as a network node (e.g., BS), is provided below.

Under certain proposed schemes in accordance with the present disclosure with respect to supporting an advanced mobile communication system with enhanced channel designs (e.g., to operate in legacy spectrum), processor 422 of network apparatus 420 may select a first number (N) of RBs from a second number (X) of RBs on a PBCH in an event that network apparatus 420 is operating in a frequency band with a transmission bandwidth less than a threshold. Then, processor 422 may perform, via transceiver 426, a PBCH transmission to communication apparatus 410 based on the first number of RBs. On the other hand, from the perspective of communication apparatus 410, processor 412 may detect, via transceiver 416, a synchronization raster point associated with a cell of a transmission bandwidth on a frequency band. Then, processor 412 may determine a first number of RBs for a PBCH in an event that the transmission bandwidth of the frequency band is less than a threshold. Also, processor 412 may perform, via transceiver 416, a PBCH reception from network apparatus 420 based on the first number of RBs.

In some implementations, processor 422 may also puncture a third number (Y) of RBs for the PBCH transmission, wherein Y = X - N.

In some implementations, the third number of RBs may include first Y/2 RBs and last Y/2 RBs in the second number of RBs.

In some implementations, the PBCH transmission may include a PSS and an SSS, and the PSS and the SSS are not punctured.

In some implementations, the second number of RBs may include 20 RBs and the threshold may be 5 MHz.

In some implementations, the first number of RBs may include 12 RBs and the transmission bandwidth may be 3 MHz.

In some implementations, processor 412 may also determine a second number of RBs for the PBCH in an event that the transmission bandwidth of the frequency band is greater than or equal to the threshold, and perform the PBCH reception from the BS based on the second number of RBs. Additionally, or optionally, the second number of RBs may include 20 RBs and the threshold may be 5 MHz.

Under certain proposed schemes in accordance with the present disclosure with respect to supporting an advanced mobile communication system with enhanced channel designs (e.g., to operate in legacy spectrum), processor 422 of network apparatus 420 may configure a first number of RBs for a CORESET of a PDCCH in an event that network apparatus 420 is operating in a frequency band with a transmission bandwidth less than a threshold, wherein the first number of RBs include 12 RBs. Then, processor 422 may perform, via transceiver 426, a PDCCH transmission to communication apparatus 410 based on the first number of RBs. On the other hand, from the perspective of communication apparatus 410, processor 412 may detect, via transceiver 416, a synchronization raster point associated with a cell of a transmission bandwidth on a frequency band. Then, processor 412 may configure a first number of RBs for a CORESET of a PDCCH in an event that the transmission bandwidth of the frequency band is less than a threshold, wherein the first number of RBs comprise 12 RBs. Also, processor 412 may perform, via transceiver 416, a PDCCH reception from network apparatus 420 based on the first number of RBs.

In some implementations, the CORESET may be associated with a CORESET index 0.

In some implementations, the CORESET may be associated with system information block type 1 (SIB1) transmission.

In some implementations, the threshold may be 5 MHz, and the transmission bandwidth may be 3 MHz.

In some implementations, the configuring of the first number of RBs may be performed based on a pre-defined table specifying a set of resource blocks and slot symbols of the CORESET for TypeO-PDCCH search space set when a SCS of the PDCCH is 15 KHz for frequency bands with minimum transmission bandwidth of 3 MHz.

In some implementations, processor 422 may also configure a second number of RBs for the CORESET of the PDCCH in an event that network apparatus 420 is operating in a frequency band with a transmission bandwidth of 5 MHz, wherein the second number of RBs include 24 RBs.

In some implementations, the configuring of the second number of RBs may be performed based on a pre-defined table specifying a set of resource blocks and slot symbols of the CORESET for TypeO-PDCCH search space set when a SCS of the PDCCH is 15 KHz for frequency bands with minimum transmission bandwidth of 3 MHz.

Under certain proposed schemes in accordance with the present disclosure with respect to supporting an advanced mobile communication system with enhanced channel designs (e.g., to operate in legacy spectrum), processor 422 of network apparatus 420 may configure a TRS with a minimum number of RBs in an event that network apparatus 420 is operating in a frequency band with a transmission bandwidth less than a threshold, wherein the minimum number of RBs include 16 RBs. Then, processor 422 may perform, via transceiver 426, a TRS transmission to communication apparatus 410 based on the minimum number of RBs. On the other hand, from the perspective of communication apparatus 410, processor 412 may perform, via transceiver 416, a TRS reception from network apparatus 420 based on the minimum number of RBs.

In some implementations, the minimum number of RBs may be reduced from 24 RBs to 16 RBs.

In some implementations, the 24 RBs may be supported for TRS configuration in a transmission bandwidth of 5 MHz.

In some implementations, the threshold may be 5 MHz, and the transmission bandwidth may be 3 MHz.

### Illustrative Processes

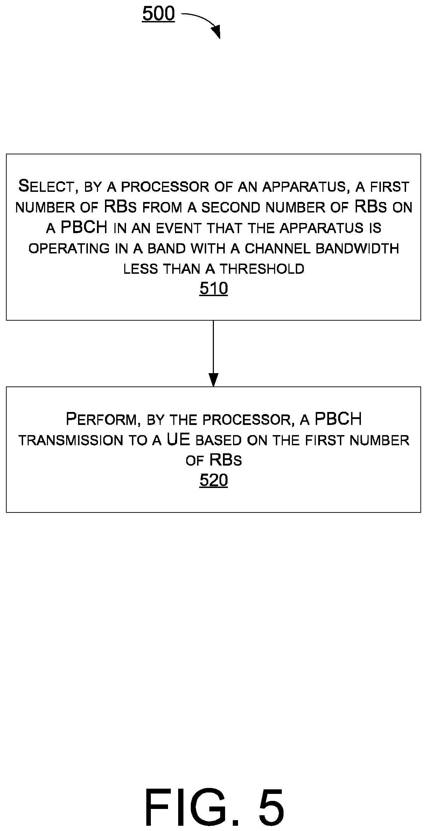

FIG. 5 illustrates an example process 500 in accordance with an implementation of the present disclosure. Process 500 may be an example implementation of the above scenarios/schemes, whether partially or completely, with respect to supporting an advanced mobile communication system with enhanced channel designs (e.g., to operate in legacy spectrum). Process 500 may represent an aspect of implementation of features of network apparatus 420. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks of process 500 may be executed in the order shown in FIG. 5 or, alternatively, in a different order. Process 500 may be implemented by or in network apparatus 420 as well as any variations thereof. Solely for illustrative purposes and without limitation, process 500 is described below in the context of network apparatus 420. Process 500 may begin at block 510.

At 510, process 500 may involve processor 422 of network apparatus 420 selecting a first number (N) of RBs from a second number (X) of RBs on a PBCH in an event that network apparatus 420 is operating in a frequency band with a transmission bandwidth less than a threshold. Process 500 may proceed from 510 to 520.

At 520, process 500 may involve processor 422 performing, via transceiver 426, a PBCH transmission to a UE (e.g., communication apparatus 410) based on the first number of RBs.

In some implementations, process 500 may further involve processor 422 puncturing a third number (Y) of RBs for the PBCH transmission, wherein Y = X - N.

In some implementations, the third number of RBs may include first Y/2 RBs and last Y/2 RBs in the second number of RBs.

In some implementations, the PBCH transmission may include a PSS and an SSS, and the PSS and the SSS are not punctured.

In some implementations, the second number of RBs may include 20 RBs and the threshold may be 5 MHz.

In some implementations, the first number of RBs may include 12 RBs and the transmission bandwidth may be 3 MHz.

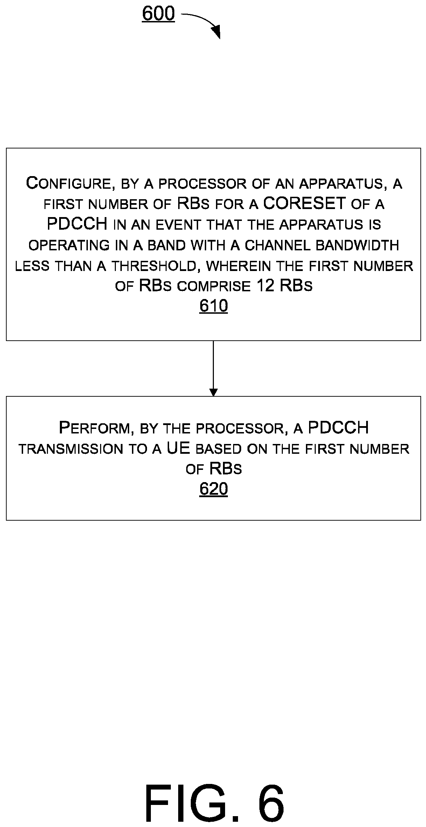

FIG. 6 illustrates an example process 600 in accordance with an implementation of the present disclosure. Process 600 may be an example implementation of the above scenarios/schemes, whether partially or completely, with respect to supporting an advanced mobile communication system with enhanced channel designs (e.g., to operate in legacy spectrum). Process 600 may represent an aspect of implementation of features of network apparatus 420. Process 600 may include one or more operations, actions, or functions as illustrated by one or more of blocks 610 and 620. Although illustrated as discrete blocks, various blocks of process 600 may be divided into additional blocks, combined into fewer blocks, or eliminated, depending on the desired implementation. Moreover, the blocks of process 600 may be executed in the order shown in FIG. 6 or, alternatively, in a different order. Process 600 may be implemented by or in network apparatus 420 as well as any variations thereof. Solely for illustrative purposes and without limitation, process 600 is described below in the context of network apparatus 420. Process 600 may begin at block 610.

At 610, process 600 may involve processor 422 of network apparatus 420 configuring a first number of RBs for a CORESET of a PDCCH in an event that network apparatus 420 is operating in a frequency band with a transmission bandwidth less than a threshold, wherein the first number of RBs include 12 RBs. Process 600 may proceed from 610 to 620.

At 620, process 600 may involve processor 422 performing, via transceiver 426, a PDCCH transmission to a UE (e.g., communication apparatus 410) based on the first number of RBs.

In some implementations, the CORESET may be associated with a CORESET index 0.

In some implementations, the CORESET may be associated with SIB1 transmission.

In some implementations, the threshold may be 5 MHz, and the transmission bandwidth may be 3 MHz.

In some implementations, the configuring of the first number of RBs may be performed based on a pre-defined table specifying a set of resource blocks and slot symbols of the CORESET for TypeO-PDCCH search space set when a SCS of the PDCCH is 15 KHz for frequency bands with minimum transmission bandwidth of 3 MHz.

In some implementations, process 600 may further involve processor 422 configuring a second number of RBs for the CORESET of the PDCCH in an event that network apparatus 420 is operating in a frequency band with a transmission bandwidth of 5 MHz, wherein the second number of RBs include 24 RBs.

In some implementations, the configuring of the second number of RBs may be performed based on a pre-defined table specifying a set of resource blocks and slot symbols of the CORESET for TypeO-PDCCH search space set when a SCS of the PDCCH is 15 KHz for frequency bands with minimum transmission bandwidth of 3 MHz.

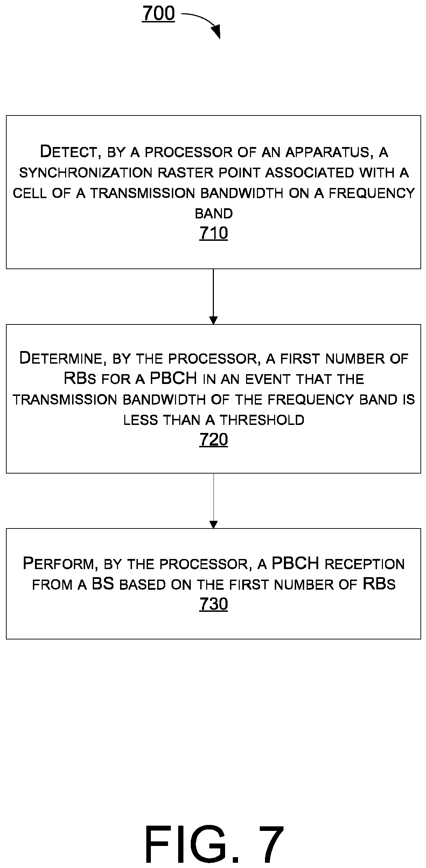

FIG. 7 illustrates an example process 700 in accordance with an implementation of the present disclosure. Process 700 may be an example implementation of the above scenarios/schemes, whether partially or completely, with respect to supporting an advanced mobile communication system with enhanced channel designs (e.g., to operate in legacy spectrum). Process 700 may represent an aspect of implementation of features of communication apparatus 410. Process 700 may include one or more operations, actions, or functions as illustrated by one or more of blocks 710 to 730. Although illustrated as discrete blocks, various blocks of process 700 may be divided into additional blocks, combined into fewer blocks, or eliminated, depending on the desired implementation. Moreover, the blocks of process 700 may be executed in the order shown in FIG. 7 or, alternatively, in a different order. Process 700 may be implemented by or in communication apparatus 410 as well as any variations thereof. Solely for illustrative purposes and without limitation, process 700 is described below in the context of communication apparatus 410. Process 700 may begin at block 710.

At 710, process 700 may involve processor 412 of communication apparatus 410 detecting, via transceiver 416, a synchronization raster point associated with a cell of a transmission bandwidth on a frequency band. Process 700 may proceed from 710 to 720.

At 720, process 700 may involve processor 412 determining a first number of RBs for a PBCH in an event that the transmission bandwidth of the frequency band is less than a threshold. Process 700 may proceed from 720 to 730.

At 730, process 700 may involve processor 412 performing, via transceiver 416, a PBCH reception from a BS based on the first number of RBs.

In some implementations, the first number of RBs may include 12 RBs and the transmission bandwidth may be 3 MHz.

In some implementations, process 700 may further involve processor 412 determining a second number of RBs for the PBCH in an event that the transmission bandwidth of the frequency band is greater than or equal to the threshold, and performing, via transceiver 416, the PBCH reception from the BS based on the second number of RBs.

In some implementations, the second number of RBs may include 20 RBs and the threshold may be 5 MHz.

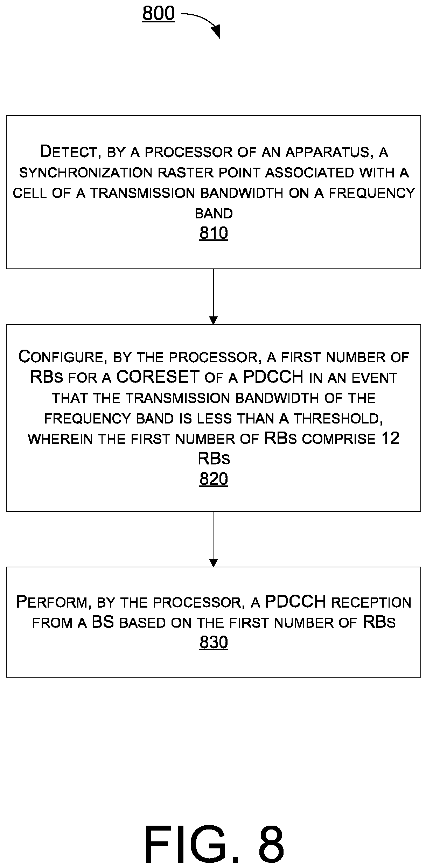

FIG. 8 illustrates an example process 800 in accordance with an implementation of the present disclosure. Process 800 may be an example implementation of the above scenarios/schemes, whether partially or completely, with respect to supporting an advanced mobile communication system with enhanced channel designs (e.g., to operate in legacy spectrum). Process 800 may represent an aspect of implementation of features of communication apparatus 410. Process 800 may include one or more operations, actions, or functions as illustrated by one or more of blocks 810 to 830. Although illustrated as discrete blocks, various blocks of process 800 may be divided into additional blocks, combined into fewer blocks, or eliminated, depending on the desired implementation. Moreover, the blocks of process 800 may be executed in the order shown in FIG. 8 or, alternatively, in a different order. Process 800 may be implemented by or in communication apparatus 410 as well as any variations thereof. Solely for illustrative purposes and without limitation, process 800 is described below in the context of communication apparatus 410. Process 800 may begin at block 810.

At 810, process 800 may involve processor 412 of communication apparatus 410 detecting, via transceiver 416, a synchronization raster point associated with a cell of a transmission bandwidth on a frequency band. Process 800 may proceed from 810 to 820.

At 820, process 800 may involve processor 412 configuring a first number of RBs for a CORESET of a PDCCH in an event that the transmission bandwidth of the frequency band is less than a threshold, wherein the first number of RBs include 12 RBs. Process 800 may proceed from 820 to 830.

At 830, process 800 may involve processor 412 performing, via transceiver 416, a PDCCH reception from a BS based on the first number of RBs.

In some implementations, the CORESET may be associated with a CORESET index 0.

In some implementations, the threshold may be 5 MHz, and the transmission bandwidth may be 3 MHz.

In some implementations, the configuring of the first number of RBs may be performed based on a pre-defined table specifying a set of resource blocks and slot symbols of the CORESET for TypeO-PDCCH search space set when a SCS of the PDCCH is 15 KHz for frequency bands with minimum transmission bandwidth of 3 MHz.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method (500), comprising:
selecting (510), by a processor (422) of an apparatus (420), a first number (N) of resource blocks, RBs, from a second number (X) of RBs on a physical broadcast channel, PBCH, in an event that the apparatus (420) is operating in a frequency band with a transmission bandwidth less than a threshold; and
performing (520), by the processor (422), a PBCH transmission to a user equipment (410), UE, based on the first number of RBs.

2. The method (500) of Claim 1, further comprising:
puncturing, by the processor (422), a third number (Y) of RBs for the PBCH transmission, wherein Y = X - N.

3. The method (500) of Claim 2, wherein the third number of RBs comprise first Y/2 RBs and last Y/2 RBs in the second number of RBs; or wherein the PBCH transmission comprises a primary synchronization signal, PSS, and a secondary synchronization signal, SSS, and the PSS and the SSS are not punctured.

4. The method (500) of Claim 1, wherein the second number of RBs comprise 20 RBs and the threshold is 5 mega-hertz, MHz; or wherein the first number of RBs comprise 12 RBs and the transmission bandwidth is 3 MHz.

5. A method (600), comprising:
configuring (610), by a processor (422) of an apparatus (420), a first number of resource blocks, RBs, for a control resource set, CORESET, of a physical downlink control channel, PDCCH, in an event that the apparatus (420) is operating in a frequency band with a transmission bandwidth less than a threshold, wherein the first number of RBs comprise 12 RBs; and
performing (620), by the processor (422), a PDCCH transmission to a user equipment (410), UE, based on the first number of RBs.

6. The method (600) of Claim 5, wherein the CORESET is associated with a CORESET index 0; or wherein the threshold is 5 mega-hertz, MHz, and the transmission bandwidth is 3 MHz.

7. The method (600) of Claim 5, wherein the configuring of the first number of RBs is performed based on a pre-defined table specifying a set of resource blocks and slot symbols of the CORESET for TypeO-PDCCH search space set when a subcarrier spacing, SCS, of the PDCCH is 15 kilo-herz, KHz, for frequency bands with minimum transmission bandwidth of 3 MHz.

8. The method (600) of Claim 5, further comprising:
configuring, by the processor (422), a second number of RBs for the CORESET of the PDCCH in an event that the apparatus (420) is operating in a frequency band with a transmission bandwidth of 5 MHz, wherein the second number of RBs comprise 24 RBs.

9. The method (600) of Claim 8, wherein the configuring of the second number of RBs is performed based on a pre-defined table specifying a set of resource blocks and slot symbols of the CORESET for TypeO-PDCCH search space set when a subcarrier spacing, SCS, of the PDCCH is 15 kilo-herz, KHz, for frequency bands with minimum transmission bandwidth of 3 MHz.

10. A method (700), comprising:
detecting (710), by a processor (412) of an apparatus (410), a synchronization raster point associated with a cell of a transmission bandwidth on a frequency band;
determining (720), by the processor (412), a first number of resource blocks, RBs, for a physical broadcast channel, PBCH, in an event that the transmission bandwidth of the frequency band is less than a threshold; and
performing (730), by the processor (412), a PBCH reception from a base station (420), BS, based on the first number of RBs.

11. The method (700) of Claim 10, wherein the first number of RBs comprise 12 RBs and the transmission bandwidth is 3 mega-hertz, MHz.

12. The method (700) of Claim 10, further comprising:
determining, by the processor (412), a second number of RBs for the PBCH in an event that the transmission bandwidth of the frequency band is greater than or equal to the threshold; and
performing, by the processor (412), the PBCH reception from the BS (420) based on the second number of RBs.

13. The method (700) of Claim 12, wherein the second number of RBs comprise 20 RBs and the threshold is 5 mega-hertz, MHz.

14. A method (800), comprising:
detecting (810), by a processor (412) of an apparatus (410), a synchronization raster point associated with a cell of a transmission bandwidth on a frequency band;
configuring (820), by the processor (412), a first number of resource blocks, RBs, for a control resource set, CORESET, of a physical downlink control channel, PDCCH, in an event that the transmission bandwidth of the frequency band is less than a threshold, wherein the first number of RBs comprise 12 RBs; and
performing (830), by the processor (412), a PDCCH reception from a base station (420), BS, based on the first number of RBs.

15. The method (800) of Claim 14, wherein the CORESET is associated with a CORESET index 0; or wherein the threshold is 5 mega-hertz, MHz, and the transmission bandwidth is 3 MHz; or wherein the configuring of the first number of RBs is performed based on a pre-defined table specifying a set of resource blocks and slot symbols of the CORESET for TypeO-PDCCH search space set when a subcarrier spacing, SCS, of the PDCCH is 15 kilo-herz, KHz, for frequency bands with minimum transmission bandwidth of 3 MHz.
